# EUROPÄISCHE PATENTSCHRIFT

(11) **EP 1 409 313 B1**
(45) Veröffentlichungstag und Bekanntmachung des Hinweises auf die Patenterteilung: **23.08.2006**
(21) Anmeldenummer: 02758088.5
(22) Anmeldetag: 11.07.2002
(51) Int. Cl.: B60T 7/22, B60R 21/01

(54) **VERFAHREN UND VORRICHTUNG ZUM AUTOMATISCHEN AUSLÖSEN EINER VERZÖGERUNG EINES FAHRZEUGS**
METHOD AND DEVICE FOR AUTOMATICALLY TRIGGERING A DECELERATION IN A MOTOR VEHICLE
PROCEDE ET DISPOSITIF POUR DECLENCHER AUTOMATIQUEMENT UNE DECELERATION D'UN VEHICULE

(30) Priorität: 11.07.2001 DE 10133028
(43) Veröffentlichungstag der Anmeldung: 21.04.2004
(73) Patentinhaber: ROBERT BOSCH GMBH, 70442 Stuttgart (DE)
(72) Erfinder: KNOOP, Michael, 71638 Ludwigsburg (DE); BRAEUCHLE, Goetz, 74934 Reichertshausen (DE); WINNER, Hermann, 76467 Bietigheim (DE); WEILKES, Michael, 74343 Sachsenheim (DE); HEINEBRODT, Martin, 70176 Stuttgart (DE); UHLER, Werner, 76646 Bruchsal (DE); HERMSEN, Wolfgang, 61267 Neu-Anspach (DE); THIELE, Joachim, 70732 Tamm (DE); STAEMPFLE, Martin, 89075 Ulm (DE); OECHSLE, Fred, 71642 Ludwigsburg (DE); WILHELM, Ulf, 71277 Rutesheim (DE)
(86) Internationale Anmeldenummer: PCT/DE2002/002543
(87) Internationale Veröffentlichungsnummer: WO 2003/006289

(56) Entgegenhaltungen:
- DE-A- 19 547 111
- DE-A- 19 748 898
- US-A- 6 085 151
- WINNER ET AL: "Adaptive Cruise Control System Aspects and Development Trends" SAE TRANSACTIONS, SOCIETY OF AUTOMOTIVE ENGINEERS, INC., WARRENDALE, PA, US, Bd. 105, Nr. 961010, 1996, Seiten 1412-1421, XP002124577 ISSN: 0096-736X in der Anmeldung erwähnt

## Beschreibung

### Stand der Technik

In der Vergangenheit sind vermehrt Systeme zur Abstands- und Geschwindigkeitsregelung auf den Markt gekommen, die die Funktionalität eines herkömmlichen Tempomaten dahingehend erweitern, dass bei Erkennen eines langsameren, vorherfahrenden Fahrzeugs vor dem eigenen Fahrzeug, die Geschwindigkeitsregelung umgeschaltet wird auf eine Abstandsregelung und dem vorherfahrenden Fahrzeug mit gleicher Geschwindigkeit gefolgt wird. Die grundsätzliche Funktionsweise eines derartigen Abstands- und Geschwindigkeitsregelsystems ist in dem Aufsatz "adaptive cruise control system - aspects and development trends" von Winner, Witte et al., SAE-paper 96 10 10, erschienen auf der SAE International Congress and Exposition, Detroit, 26.-29. Februar 1996, beschrieben.

In der DE 195 47 111 ist ein Verfahren und eine Vorrichtung zur Steuerung der Bremsanlage eines Fahrzeugs beschrieben, bei welchem bereits vor Beginn einer Antriebsschlupfregelung Druck in die Radbremsen bei Vorliegen vorgegebener Bedingungen eingesteuert wird, wobei keine nennenswerte Bremswirkung an den Antriebsrädern aufgebracht wird.

Aus der US 6,085,151, die als nächstliegender Stand der Technik betrachlet wird, ist vorrausschauendes Kollisionserkennungssystem bekannt, bei dem schmal gebündelte, hochfrequente oder optische elektromagnetische Strahlung über einen relativ breiten Azimutbereich geschwenkt wird. Das Empfangssignal wird ausgewertet um die Entfernung und Geschwindigkeit eines jeden Reflexionspunktes zu erhalten. Einzelne Ziele werden durch Clustering und Tracking erkannt und in einem kartesischen Koordinatensystem unter Zuhilfenahme eines Kalman-Filters ausgewertet. Die Gefährdung des eigenen Fahrzeugs wird aus vorausgeschätzten Werten für Abstand, Relativgeschwindigkeit und Größe jedes einzelnen Ziels bestimmt und in Abhängigkeit der bestimmten Gefährdung eine oder mehrere Fahrzeugeinrichtungen angesteuert um die Sicherheit der Fahrzeuginsassen zu erhöhen. In einer bevorzugten Ausführungsform wird ein quantisiertes, lineares, frequenzmoduliertes Dauerstrichsignal mittels einer mehrstrahligen Antenne abgestrahlt und empfangen, wobei die Antenne einen azimutalen Erfassungsbereich von mindestens +/- 100 Grad und eine Einzelstrahlbreite von etwa 10 Grad aufweist.

### Kern und Vorteile der Erfindung

Der Kern der vorliegenden Erfindung ist es, ein Verfahren und eine Vorrichtung anzugeben, mittels denen eine automatische Verzögerung des eigenen Fahrzeugs zur Verhinderung einer Kollision oder eine Verminderung der Folgen einer bevorstehenden Kollision mit einem weiteren Objekt durchgeführt werden kann.

Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise werden der Vorrichtung Signale einer Einrichtung zum Aussenden und Empfangen von Radar- oder Lidarsignalen oder einer Einrichtung zum Empfangen von Videosignalen, die Objekte im Kursbereich des Fahrzeugs detektieren, zugeführt.

Vorteilhafterweise können auch weitere Sensoren, die das Fahrzeugumfeld erfassen dieser Einrichtung Signale zuführen. Genauso ist es im Rahmen dieser Erfindung denkbar, dass Signale von Vorrichtungen des Fahrzeugs, aus denen das eigene Fahrverhalten beschreibbar ist, hierzu herangezogen werden.

Weiterhin ist es vorteilhaft, in einer Gefährdungspotenzialermittlungseinrichtung in Abhängigkeit der erkannten Objekte ein Gefährdungspotenzial zu ermitteln, in das z.B. die Wahrscheinlichkeit eines Zusammenstoßes mit einem von der Fahrzeugumfeldsensorik erkannten Objekt eingeht.

Vorteilhafterweise besteht das Gefährdungspotenzial aus mehreren Werten, um die Komplexität der zu erwartenden Situation hinreichend beschreiben zu können.In Abhängigkeit des ermittelten Gefährdungspotenzials können die Fahrzeugverzögerungseinrichtungen für die bevorstehende Verzögerung vorbereitet werden um die Ansprechzeit im Auslösefall zu verringern.

Vorteilhafterweise werden in Abhängigkeit des Gefährdungspotenzials die Verzögerungseinrichtungen derart auf die Bremsung des Fahrzeugs vorbereitet, dass in der Bremsanlage ein Bremsdruck aufgebaut wird, der das Bremssystem vorbefüllt und die Bremsbeläge an die Bremsscheiben derart anlegt, dass keine nennenswerte Fahrzeugverzögerung eintritt. Im Auslösefall kann der Bremsdruck wesentlich schneller aufgebaut werden, wodurch sich eine Verkürzung der Ansprechzeiten der Verzögerungswirkung ergibt.

Vorteilhafterweise werden in Abhängigkeit des Gefährdungspotenzials weitere Fahrzeugfunktionen ausgeführt, die die Sicherheit der Fahrzeuginsassen für den Fall einer unvermeidbaren Kollision erhöhen. Dabei kommen insbesondere Funktionen in Betracht, die den Antriebsstrang des Fahrzeugs in einen Zusatnd versetzen, dass keine Antriebskraft mehr auf die Fahrzeugräder wirkt wie vorteilhafterweise eine Absenkung der Motordrehzahl auf Leerlaufdrehzahl oder eine Deaktivierung des Motors durch Abschalten der Zündanlage bzw. keine weitere Kraftstoffeinspritzung. Weiterhin ist zu nennnen, dass die Antriebskraftübertragung auf die Räder durch eine Getriebebeeinflussung erreicht werden kann, indem eine neutrale Getriebestufe eingelegt wird bzw. das Getriebe in Leerlaufstellung gebracht wird.

Weitere vorteilhafte Funktionen, mit denen die Insassensicherheit erhöht werden kann ist das Vorbereiten der Insassenrückhaltemittel. Reversible Rückhaltesysteme , vorteilhafterweise in Form von Gurtstraffern können die Insassen in die richtige Sitzposition zwingen, so dass im Falle eines unvermeidbaren Zusammenstoßes die irreversiblen Rückhaltesysteme, vorteilhafterweise in Form von Airbags, ihre volle Wirkung entfalten können. Weiterhin kann als vorbereitende Funktion die Auslöseschwelle dieser irreversiblen Rückhaltesysteme in Abhängigkeit der eigenen Fahrsituation und der erkannten Objektbewegung so verändert werden, dass die Rückhaltesysteme im bestmöglichen Zeitpunkt und mit einer, der jeweiligen Situation angepaßten Stärke ausgelöst werden.

Besonders vorteilhafte Funktionen sind weiterhin, dass die anderen Verkehrsteilnehmer über die bevorstehende Kollision informiert werden, indem vorteilhafterweise die Warnblinkanlage eingeschaltet wird, die Hupe aktiviert wird oder mittels einer Funkübertragung das nachfolgende Fahrzeug über die drohende Kollision informiert werden. Hierfür ist es notwendig, dass sowohl das eigene als auch die nachfolgenden Fahrzeuge mit einer entsprechenden, drahtlosen Kommunikationsschnittstelle ausgerüstet sind.

Besonders vorteilhaft ist es weiterhin, dass als Funktion vorgesehen ist, dass die vor der Kollision eingehenden Daten, sowohl die der Umfeldsensoriken als auch die von den eigenen Fahrsituationssensoren, in einem nicht-flüchtigen Speicher abgelegt werden. Auf diese Weise kann der Unfallhergang im Nachhinein geklärt werden aber auch eine Weiterentwicklung von Auslösealgorithmen für Fahrzeugverzögerungen betrieben werden.

Vorteilhafterweise wird bei Erkennen einer unausweichlichen Kollisionssituation eine Verkehrsleitstelle, eine Notrufzentrale oder ein Telematikdienst über den momentanen Aufenthaltsort des Fahrzeugs und das Vorliegen einer Kollisionsituation informiert, was vorteilhafterweise mittels eines im Fahrzeug installierten Mobiltelefons geschehen kann. Auf diese Weise kann bereits zu einem frühstmöglichen Zeitpunkt eine Hilfeleistung angefordert werden. Es ist vorteilhafterweise denkbar, dass die informierte Verkehrsleitstelle, Notrufzentrale oder der Telematikdienst kurz nach Eingang dieser Information das Gerät zurückruft, das die Hilfeanforderung abgesetzt hat, um sich über Vorliegen der vorausberechneten Kollision zu vergewissern und um eine gezielte Hilfeleistung vorzubereiten.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor ablauffähig und zur Ausführung des erfindungsgemäßen Verfahrens geeignet ist. In diesem Fall wird also die Erfindung durch einen auf dem Steuerelement abgespeichertes Programm realisiert, so dass dieses mit dem Programm versehen Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammensetzung in den Patentansprüchen oder deren Rückbeziehung sowie unabhängig von ihrer Formulierung bzw. Darstellung in der Beschreibung bzw. in der Zeichnung.

### Zeichnungen

Nachfolgend werden Ausführungsbeispiele der Erfindung anhand von Zeichnungen erläutert. Es zeigen
- Figur: 1 ein Ablaufdiagramm zur Durchführung des erfindungsgemäßen Verfahrens und

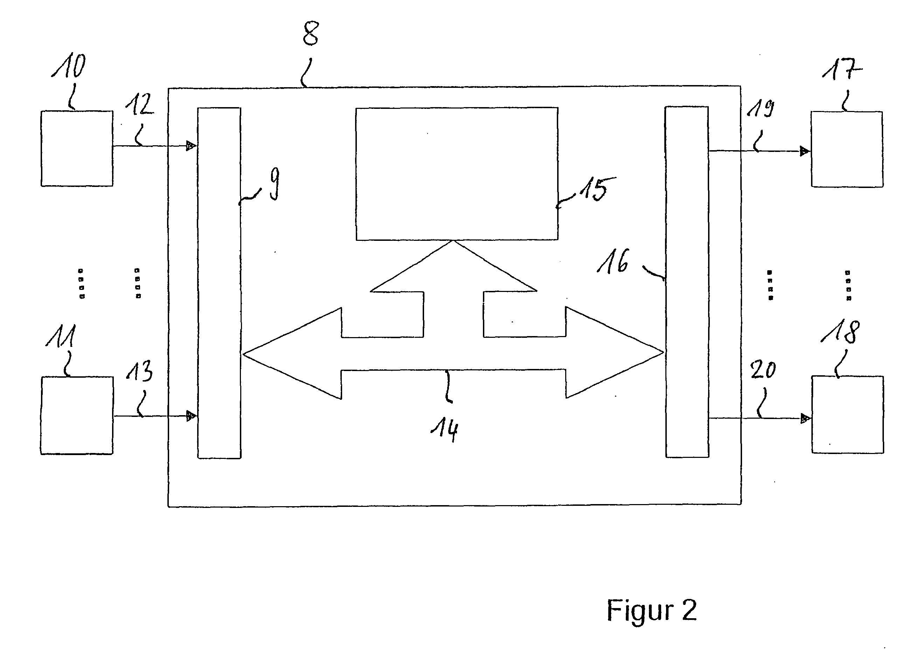

- Figur 2: ein Blockschaltbild einer Vorrichtung zur Durchführung des erfindungsgemäßen Verfahrens.

### Beschreibung von Ausführungsbeispielen

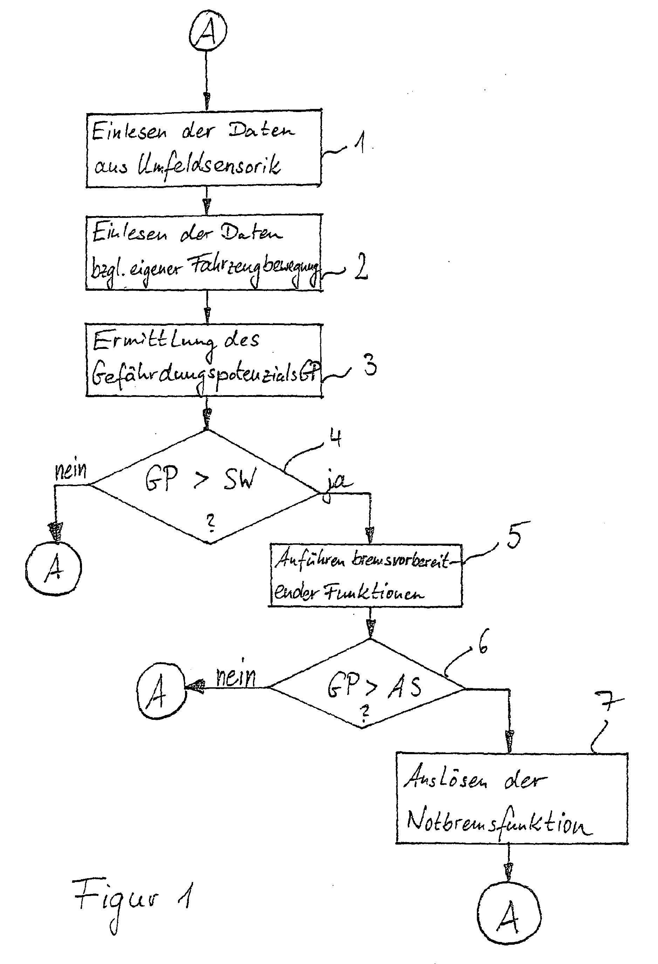

Figur 1 zeigt ein Ablaufdiagramm des erfindungsgemäßen Verfahrens. Dieses Verfahren ist vorteilhafterweise in Form eines ablauffähigen Programms in einem Mikroprozessor implementiert. Das Ablaufdiagramm ist ein Verfahren, das nach dem Starten beliebig oft wiederholt wird und bei Erreichen des Endes A wieder an den Anfang A zurückspringt. In Schritt 1 werden Daten von einer Umfeldsensorik, mit der das Fahrzeug ausgerüstet ist, eingelesen. Als Umfeldsensorik kommt vorteilhafterweise eine Einrichtung zum Aussenden und Empfangen von Radar- oder Lidarsignalen oder eine Einrichtung zum Empfangen von Videosignalen in Betracht. Die eingelesenen Daten beschreiben Objekte im Erfassungsbereich der Sensorik und Bestehen mindestens aus den Größen Relativposition des Objekts zum Fahrzeug, Relativgeschwindigkeit des Objekts und Abstand des Objekts. Weitere Größen, die von der Umfeldsensorik bereitgestellt werden können, sind beispielsweise horizontale Ausdehnung des Objekts, vertikale Ausdehnung des Objekts, Geometrie des Objekts oder Oberflächenbeschaffenheit der Reflexionsfläche. In Schritt 2 des Ablaufdiagramms werden Daten eingelesen, die die eigene Fahrzeugbewegung beschreiben. Diese Daten stammen von Einrichtungen zur Ermittlung der eigenen Fahrgeschwindigkeit, Gierrate, Fahrzeugbewegungsrichtung in Relation zur Fahrzeuglängsachse (Schwimmwinkelsensor), Bremspedalbetätigung, Fahrpedalbetätigung oder Lenkwinkelsensor.
In Schritt 3 wird aus den Daten der Umfeldsensorik sowie aus den Daten, die das eigene Fahrverhalten charakterisieren ein aktuelles Gefährdungspotenzial GP bestimmt. Dieses Gefährdungspotenzial beschreibt die Wahrscheinlichkeit, dass ein Zusammenstoss mit einem von der Umfeldsensorik erkannten Objekt unausweichlich ist. Im darauffolgenden Schritt 4 wird in einer Entscheidung geprüft, ob das aktuelle Gefährdungspotenzial GP größer ist als ein vorgebbarer Schwellenwert SW. Dieser Schwellenwert SW stellt die Gefährdungspotenzialauslöseschwelle dar. Ist dies nicht der Fall, das heißt, dass das Gefährdungpotenzial GP unterhalb dieser Gefährdungspotenzialauslöseschwelle SW liegt oder gleich groß ist, so verzweigt das Ablaufdiagramm direkt zum Kreis A und springt an den Anfang zurück, worauf es von Neuem durchlaufen wird. Wurde die Entscheidung in Schritt 4 mit "Ja" beantwortet, das heisst, dass das aktuelle Gefährdungspotenzial GP größer als die Gefährdungspotenzialauslöseschwelle SW ist, so wird in Schritt 5 veranlaßt, dass die Bremsanlage für eine bevorstehende Not- bzw. Vollbremsung vorbereitet wird, da mit einer unmittelbar bevorstehenden Kollision gerechnet werden muß. Diese Vorbereitung geschieht erfindunggemäß durch ein Vorbefüllen der Bremsanlage und einen Bremsdruckaufbau, der so dosiert ist, dass die Bremsbeläge an den Bremsscheiben anliegen, jedoch noch keine nennenswerte Verzögerungswirkung eintritt. Mit Vorbereiten der Bremsanlage werden zusätzlich noch weitere Fahrzeugfunktionen ausgeführt um die Insassensicherheit für den Fall eines Zusammenstoßes zu erhöhen. Als weitere Fahrzeugfunktionen sind zu nennen, dass der Motor auf Leerlaufdrehzahl abgesenkt wird oder der Motor deaktiviert wird, dass das Getriebe in eine neutrale Stellung geschaltet wird, so dass keine Kraftübertragung stattfinden kann, dass die reversiblen Insassenrückhalte-systeme aktiviert werden, dass die die Auslöseschwellen der irreversiblen Insassenrückhaltesysteme derart modifiziert werden, dass sie dem aktuellen Gefährdungspotenzial entsprechen, dass eine Regeleinrichtung zur Steuerung eines Brems- und/oder Motoreingriffs zur Stabilisierung der Fahrzeugbewegung derart modifiziert wird, dass sie für eine starke Fahrzeugverzögerung optimiert ist, dass durch Aktivierung der Fahrtrichtungsanzeigeeinrichtungen und/oder der Hupe die anderen Verkehrsteilnehmer gewarnt werden, dass mittels einer Funkübertragung die nachfolgenden Fahrzeuge über die bevorstehende Verzögerung des Fahrzeugs informiert werden, dass Daten der erkannten Objekte im Fahrzeugumfeld und Daten, die das eigene Fahrverhalten charakterisieren in einer nicht-flüchtigen Speichereinrichtung abgelegt werden oder dass mittels einer Funkübertragung eine Verkehrsleitzentrale oder eine Notrufzentrale über die Fahrzeugposition, die mittels eines satellitengestützten Ortungsverfahrens bestimmt wurde, informiert wird oder eine Kombination aus diesen.
In einem weiteren Schritt 6 wird abgefragt, ob das Gefährdungspotenzial GP größer ist, als eine Auslöseschwelle AS. Diese Auslöseschwelle AS ist der Wert, der bei Überschreiten eine Fahrzeugverzögerung zur Verhinderung einer Kollision mit einem weiteren Objekt automatisch auslöst. Wurde die Abfrage in Schritt 6 mit "Nein" beantwortet, das heisst, dass das Gefährdungspotenzial GP kleiner oder gleich dem Auslöseschwellenwert AS ist, so verzweigt das Ablaufdiagramm nach Kreis A und springt an den Anfang zurück, von wo aus es wieder von Neuem durchlaufen wird. Wird in Schritt 6 festgestellt, dass das Gefährdungspotenzial GP größer als der Auslöseschwellenwert AS ist, so erfolgt in Schritt 7 eine automatische Auslösung der Voll- bzw. Notbremsung zur Vermeidung einer Kollision. Im Anschluß an Schritt 7 erreicht das Ablaufdiagramm wieder einen Kreis A, von wo aus es an den Anfang zurückspringt und von Neuem beginnt. Es ist weiterhin zu erwähnen, dass der Auslöseschwellenwert AS größer ist als der Gefährdungspotenzialschwellenwert SW, da die verzögerungsvorbereitenden Funktionen vor Auslösen der Verzögerung selbst durchgeführt werden sollen. Weiterhin ist zu erwähnen, dass der Wert AS und der Wert SW jedoch sehr nah beieinanderliegen, da Fehlaktivierungen der verzögerungsvorbereitenden Funktionen weitgehendst ausgeschlossen werden sollen. Es muß jedoch bei einem raschen Anstieg des Gefährdungspotenzials GP ausreichend Zeit zwischen dem Überschreiten des Gefährdungspotenzialschwellenwertes SW und dem Überschreiten des Auslöseschwellenwertes AS verbleiben, um vor Einleitung der Verzögerung eine vollständige Bremsvorbereitung in oben beschriebener Weise durchführen zu können. Wird einer der Aktionsschritte 5 oder 7 aktiviert, und im weiteren Verlauf stellt sich bei einem erneuten Zyklusdurchlauf des beschriebenen Verfahrens heraus, dass die Aktivierungsbedingungen nicht mehr vorliegen, so ist eine Deaktivierung bzw. Rücksetzung dieser Funktionen in verschiedenen Weisen denkbar. Zum einen ist es möglich, dass wenn eine Bedingung nicht mehr erfüllt ist, eine vorgegebene Zeitdauer abgewartet wird, in der keine erneute Aktivierung vorkommen darf, bis die Deaktivierung bzw. die Rücksetzung erfolgt. Eine weitere Möglichkeit ist es, dass das Gefährdungspotenzial GP einen weiteren Schwellenwert, der kleiner als der Aktivierungsschwellenwert ist, unterschreiten muß, um eine Rücksetzung bzw. Deaktivierung der ausgelösten Funktion vornehmen zu können.

In Figur 2 ist eine Vorrichtung zur Durchführung des oben beschriebenen Verfahrens abgebildet. Die Vorrichtung 8 zum Auslösen und bremsvorbereitender Maßnahmen sowie der Fahrzeugsverzögerung beinhaltet ein Eingangsfeld 9, dem eine oder mehrere Eingangssignale 12 bis 13 von Sensorvorrichtungen 10 bis 11 zugeführt werden. Als Sensorvorrichtungen 10 bis 11 kommen zum einen ein Radar-, Lidar- oder Videosensor oder eine Kombination hieraus in Betracht, sowie weitere Einrichtungen, mit denen das eigene Fahrzeugverhalten detektiert werden kann. Beispielsweise sind hier Einrichtungen zur Ermittlung der eigenen Fahrgeschwindigkeit, Gierrate, Fahrzeugbewegungsrichtung, Bremspedalbetätigung, Fahrpedalbetätigung oder ein Lenkwinkelsensor zu nennen, die auch in einer beliebigen Kombination eingesetzt werden können. Die im Eingangsfeld 9 ankommenden Signale werden mittels eines Datentransportsystems 14 einer Auswerteeinheit 15 zugeführt. In der Auswerteeinheit 15 wird das Verfahren zum Auslösen der Fahrzeugverzögerung zur Vermeidung einer Kollision und zur Auslösung verzögerungsvorbereitender Funktionen durchgeführt. Diese Auswerteeinrichtung 15 gibt je nach ermitteltem Gefährdungspotenzial GP, das in Abhängigkeit der Fahrzeugsituation und der Umfeldsituation bestimmt wird, Ausgangssignale aus, die mittels des Datentransportsystems 14 einem Ausgangsfeld 16 zugeführt werden. In einem Ausführungsbeispiel handelt es sich um zwei ausgebbare Ausgangssignale. Zum einen handelt es sich um ein Bremsvorbereitungssignal, das ausgegeben wird, wenn die Entscheidung im Schritt 4 mit "Ja" beantwortet wurde, woraufhin die beschriebenen bremsvorbereitenden Funktionen aktiviert bzw. ausgeführt werden. Zum anderen handelt es sich um das Auslösesignal, das ausgegeben wir, wenn die Entscheidung im Schritt 6 mit "ja" beantwortet wurde, woraufhin die Verzögerungsmittel des Fahrzeugs eine Bremsoperation durchführen. Über das Ausgangsfeld 16 werden die Siganle 19 bis 20 Einrichtungen 17 bis 18 zugeführt, in denen eine Weiterverarbeitung erfolgt. Bei den Einrichtungen 17 bis 18, denen die Ausgangssignale 19 bis 20 zugeführt werden, handelt es sich zum einen um eine Steuereinrichtung zur Ansteuerung der Bremsanlage, die in Abhängigkeit der Ausgangssignale der Vorrichtung 8 eine automatische Verzögerung durchführen kann. Weiterhin kann es sich bei den Einrichtungen 17 bis 18 um Einrichtungen zur Durchführung bzw. Auslösung der bremsvorbereitenden Maßnahmen handeln, dabei insbesondere um eine Motorsteuereinrichtung, die die Motordrehzahl auf Leerlaufdrehzahl absenken oder den Motor deaktivieren kann, um eine Getriebesteuereinrichtung, die das Getriebe in eine neutrale Stellung schalten kann, so dass keine Kraftübertragung stattfindet, um eine Rückhaltesystemsteuereinrichtung, die die reversiblen Insassenrückhaltesysteme aktivieren kann und die die Auslöseschwellen der irreversiblen Insassenrückhaltesysteme derart modifizieren kann, dass diese dem aktuellen Gefährdungspotenzial angepasst sind, handeln. Weiterhin ist es denkbar, dass es sich bei den Einrichtungen 17 bis 18 um eine Regeleinrichtung zur Steuerung eines Brems- und/oder Motoreingriffs zur Stabilisierung der Fahrzeugbewegung, die derart modifiziert wird, dass sie für eine starke Fahrzeugverzögerung optimiert ist, um eine Einrichtung zur Aktivierung der Fahrtrichtungsanzeigeeinrichtungen und/oder der Hupe, so dass die anderen Verkehrsteilnehmer gewarnt werden können, um eine Einrichtung zur Funkübertragung, die die nachfolgenden Fahrzeuge über die bevorstehende Verzögerung des Fahrzeugs informieren kann, um eine nicht-flüchtige Speichereinrichtung, die Daten der erkannten Objekte im Fahrzeugumfeld und Daten, die das Fahrverhalten des eigenen Fahrzeugs charakterisieren, speichert oder um eine Einrichtung zur Funkübertragung, die eine Verkehrsleitzentrale oder eine Notrufzentrale über die Fahrzeugposition, die mittels eines satellitengestützten Ortungsverfahrens bestimmt wurde, informiert wird, handeln.

## Patentansprüche

1. Verfahren zum automatischen Auslösen einer Verzögerung eines Fahrzeugs zur Verhinderung einer Kollision mit einem weiteren Objekt oder Verminderung der Folgen einer bevorstehenden Kollision mit einem weiteren Objekt, wobei mittels Signalen einer Einrichtung zum Aussenden und Empfangen von Radar- oder Lidarsignalen oder einer Einrichtung zum Empfangen von Videosignalen oder einer Kombination hieraus Objekte im Kursbereich des Fahrzeugs detektiert werden, Bewegungsgrößen des Fahrzeugs erfasst werden, in Abhängigkeit der erkannten Objekte und der Bewegungsgrößen ein Gefährdungspotenzial bestimmt wird und in Abhängigkeit des ermittelten Gefährdungspotenzials die Verzögerungseinrichtungen des Fahrzeugs gesteuert werden, **dadurch gekennzeichnet, dass** die Verzögerungsmittel in einem von fünf Zuständen betrieben werden, wobei
in einem ersten Zustand die Verzögerungmittel inaktiv sind,
in einem zweiten Zustand die Verzögerungsmittel in einem bremsvorbereitenden Zustand betrieben werden
in einem dritten Zustand eine Verzögerung mit einem Verzögerungswert, der deutlich unterhalb der maximal möglichen Fahrzeugverzögerung liegt, durchgeführt wird,
in einem vierten Zustand eine Verzögerung mit einem Verzögerungswert, der ungefähr der maximal möglichen Fahrzeugverzögerung entspricht, betrieben werden und
in einem fünften Zustand eine Verzögerung durchgeführt wird, bei der die Vorderräder blockiert werden und die Hinterräder blockierungsfrei bleiben.

2. Verfahren nach Anspruch 1, **dadurch gekennzeichnet, dass** der bremsvorbereitende Zustand vorsieht, dass in der Bremsanlage des Fahrzeugs ein derartiger Bremsdruck aufgebaut wird, so dass die Bremsbeläge an den Bremsscheiben anliegen ohne dass eine nennenswerte Bremswirkung eintritt.

3. Verfahren nach einem der vorhergehenden Ansprüche, **dadurch gekennzeichnet, dass** in Abhängigkeit des Gefährdungspotenzials mindestens eine weitere Funktion ausgeführt wird.

4. Verfahren nach einem der vorhergehenden Ansprüche, **dadurch gekennzeichnet, dass** als weitere Funktion vorgesehen ist,
- dass der Motor auf Leerlaufdrehzahl abgesenkt wird oder der Motor deaktiviert wird,
- dass das Getriebe in eine neutrale Stellung geschaltet wird, so dass keine Kraftübertragung stattfinden kann,
- dass die reversiblen Insassenrückhaltesysteme aktiviert werden,
- dass die die Auslöseschwellen der irreversiblen Insassenrückhaltesysteme derart modifiziert werden, dass sie dem aktuellen Gefährdungspotenzial entsprechen,
- dass eine Regeleinrichtung zur Steuerung eines Brems- und/oder Motoreingriffs zur Stabilisierung der Fahrzeugbewegung derart modifiziert wird, dass sie für eine starke Fahrzeugverzögerung optimiert ist,
- dass durch Aktivierung der Fahrtrichtungsanzeigeeinrichtungen und/oder der Hupe die anderen Verkehrsteilnehmer gewarnt werden,
- dass mittels einer Funkübertragung die nachfolgenden Fahrzeuge über die bevorstehende Verzögerung des Fahrzeugs informiert werden,
- dass Daten der erkannten Objekte im Fahrzeugumfeld und Daten, die das eigene Fahrverhalten charakterisieren in einer nicht-flüchtigen Speichereinrichtung abgelegt werden oder
- dass mittels einer Funkübertragung eine Verkehrsleitzentrale oder eine Notrufzentrale über die Fahrzeugposition, die mittels eines satellitengestützten Ortungsverfahrens bestimmt wurde, informiert wird,
oder eine Kombination hieraus.

5. Vorrichtung zum automatischen Auslösen einer Verzögerung eines Fahrzeugs zur Verhinderung einer Kollision mit einem weiteren Objekt oder Verminderung der Folgen einer bevorstehenden Kollision mit einem weiteren Objekt, **dadurch gekennzeichnet, dass** der Vorrichtung Signale einer Einrichtung zum Aussenden und Empfangen von Radar- oder Lidarsignalen oder einer Einrichtung zum Empfangen von Videosignalen, die Objekte im Kursbereich des Fahrzeugs detektieren, zugeführt werden, dass mittels einer Gefährdungspotenzialermittlungseinrichtung in Abhängigkeit der erkannten Objekte ein Gefährdungspotenzial ermittelt wird und dass Mittel zur Ansteuerung der Fahrzeugverzögerungseinrichtungen vorgesehen sind, die bei Überschreiten eines vorgegebenen Gefährdungspotenzialschwellenwertes, der unterhalb des Auslöseschwellenwertes für die Verzögerung liegt, die Verzögerungsmittel des Fahrzeugs in einen bremsvorbereitenden Zustand versetzen können.

6. Vorrichtung nach Anspruch 5, **dadurch gekennzeichnet, dass** mindestens ein weiteres Mittel vorgesehen ist, das in Abhängigkeit des Gefährdungspotenzials weitere Funktionen auslösen kann.

7. Vorrichtung nach Anspruch 5 oder 6, **dadurch gekennzeichnet, dass** als weiteres Mittel
- eine Motorsteuereinrichtung, die die Motordrehzahl auf Leerlaufdrehzahl absenken oder den Motor deaktivieren kann,
- eine Getriebesteuereinrichtung, die das Getriebe in eine neutrale Stellung schalten kann, so dass keine Kraftübertragung stattfindet,
- eine Rückhaltesystemsteuereinrichtung, die die reversiblen Insassenrückhaltesysteme aktivieren kann,
- eine Rückhaltesystemsteuereinrichtung, die die Auslöseschwellen der irreversiblen Insassenrückhaltesysteme derart modifizieren kann, dass diese dem aktuellen Gefährdungspotenzial angepasst sind,
- eine Regeleinrichtung zur Steuerung eines Brems- und/oder Motoreingriffs zur Stabilisierung der Fahrzeugbewegung, die derart modifiziert wird, dass sie für eine starke Fahrzeugverzögerung optimiert ist,
- eine Einrichtung zur Aktivierung der Fahrtrichtungsanzeigeeinrichtungen und/oder der Hupe, so dass die anderen Verkehrsteilnehmer gewarnt werden können,
- eine Einrichtung zur Funkübertragung, die die nachfolgenden Fahrzeuge über die bevorstehende Verzögerung des Fahrzeugs informieren kann,
- eine nicht-flüchtige Speichereinrichtung, die Daten der erkannten Objekte im Fahrzeugumfeld und Daten, die das Fahrverhalten des eigenen Fahrzeugs charakterisieren, speichert oder
- eine Einrichtung zur Funkübertragung, die eine Verkehrsleitzentrale oder eine Notrufzentrale über die Fahrzeugposition, die mittels eines satellitengestützten Ortungsverfahrens bestimmt wurde, informiert wird,
vorgesehen ist, oder eine Kombination hieraus.

## Claims

1. Method for automatically triggering deceleration of a vehicle in order to prevent a collision with another object or to reduce the consequences of an imminent collision with another object, objects in the area of the course of the vehicle being detected by means of signals of an apparatus for outputting and receiving radar signals or lidar signals or an apparatus for receiving video signals or a combination thereof, movement variables of the vehicle being sensed, a hazard potential being determined as a function of the detected objects and the movement variables and the deceleration apparatus of the vehicle being controlled as a function of the hazard potential which is determined, **characterized in that** the deceleration means are operated in one of five states, where
in a first state the deceleration means are inactive,
in a second state the deceleration means are operated in a state in which braking is prepared,
in a third state deceleration is carried out with a deceleration value which is significantly below the maximum possible vehicle deceleration,
in a fourth state deceleration is carried out with a deceleration value which corresponds approximately to the maximum possible vehicle deceleration, and
in a fifth state deceleration is carried out during which the front wheels are locked and the rear wheels remain free of locking.

2. Method according to Claim 1, **characterized in that** the state in which braking is prepared provides for such a braking pressure to be built in the brake system of the vehicle that the brake linings rest against the brake discs without an appreciable braking effect occurring.

3. Method according to one of the preceding claims, **characterized in that** at least one further function is carried out as a function of the hazard potential.

4. Method according to one of the preceding claims, **characterized in that** as a further function there is provision
- that the engine is lowered to the idling speed or the engine is deactivated,
- that the transmission is shifted to a neutral position so that force cannot be transmitted,
- that the reversible vehicle-occupant restraining systems are activated,
- that the triggering thresholds of the irreversible vehicle-occupant restraining systems are modified in such a way that they correspond to the current hazard potential,
- that a closed-loop control apparatus for controlling a braking intervention and/or engine intervention in order to stabilize the movement of the vehicle is modified in such a way that it is optimized for severe deceleration of the vehicle,
- that the other road users are warned by activation of the travel direction indicator apparatus and/or the horn,
- that a radio transmission informs the following vehicles about the imminent deceleration of the vehicle,
- that data about the detected objects in the surroundings of the vehicle and data which characterize the driving behaviour of the driver's own vehicle are stored in a non-volatile memory apparatus, or
- that a radio transmission informs a traffic control centre or an emergency call centre about the position of the vehicle which has been determined by means of a satellite-supported locating method,
or a combination thereof.

5. Device for automatically triggering deceleration of a vehicle in order to prevent a collision with another object or to reduce the consequences of an imminent collision with another object, **characterized in that** the device is supplied with signals from an apparatus for outputting and receiving radar signals or lidar signals or an apparatus for receiving video signals which detect objects in the area of the course of the vehicle, **in that** a hazard potential is determined by means of a hazard potential-determining apparatus as a function of the detected objects, and **in that** means are provided for actuating the vehicle deceleration apparatus, which means can place the deceleration means of the vehicle in a state in which braking is prepared when a predefined hazard potential threshold value which is below the triggering threshold value for deceleration is exceeded.

6. Device according to Claim 5, **characterized in that** at least one further means is provided which can trigger further functions in accordance with the hazard potential.

7. Device according to Claim 5 or 6, **characterized in that** further means which are provided are
- an engine control apparatus which can lower the engine speed to the idling speed or deactivate the engine,
- a transmission control apparatus which can shift the transmission to a neutral position so that force cannot be transmitted,
- a restraining system control apparatus which can activate the reversible vehicle-occupant restraining systems,
- a restraining system control apparatus which can modify the triggering thresholds of the irreversible vehicle-occupant restraining systems in such a way that they are adapted to the current hazard potential,
- a closed-loop control apparatus for controlling a braking intervention and/or engine intervention in order to stabilize the movement of the vehicle, which is modified in such a way that it is optimized for severe deceleration of the vehicle,
- an apparatus for activating the travel direction indicator apparatus and/or the horn so that the other road users can be warned,
- an apparatus for making radio transmissions which can inform the following vehicles about the imminent deceleration of the vehicle,
- a non-volatile memory apparatus which stores data about the detected objects in the surroundings of the vehicle and data which characterize the driving behaviour of the driver's own vehicle, or
- an apparatus for making radio transmissions which inform a traffic control centre or an emergency call centre about the position of the vehicle which has been determined by means of a satellite-supported locating method,
or a combination thereof.

## Revendications

1. Procédé de déclenchement automatique d'une décélération d'un véhicule pour empêcher une collision avec un autre objet ou diminuer les suites d'une collision qui précède avec un autre objet, des objets dans la trajectoire du véhicule étant détectés à l'aide de signaux d'un système d'émission et de réception de signaux radar ou lidar ou d'un système de réception de signaux vidéo ou d'une combinaison de ceux-ci, en saisissant des grandeurs de mouvement du véhicule en définissant un potentiel de danger en fonction des objets détectés et des grandeurs de mouvement, et en commandant les systèmes de décélération du véhicule en fonction du potentiel de danger déterminé,
**caractérisé en ce qu'**
on active le moyen de décélération dans un des cinq états suivants :
- dans un premier état, le moyen de décélération est inactif,
- dans un deuxième état, le moyen de décélération est activé dans un état de préparation au freinage,
- dans un troisième état, une décélération est réalisée suivant une valeur de décélération située nettement en dessous de la décélération maximale possible du véhicule,
- dans un quatrième état, une décélération est activée suivant une valeur de décélération correspondant approximativement à la décélération maximale possible du véhicule, et
- dans un cinquième état, une décélération est réalisée pour bloquer les roues avant et maintenir les roues arrière non bloquées.

2. Procédé selon la revendication 1,
**caractérisé en ce que**
l'état de préparation au freinage prévoit que l'installation de freinage du véhicule réalise une pression de freinage telle que les garnitures de frein soient sur les disques de frein sans produire un mouvement de freinage sensible.

3. Procédé selon l'une des revendications précédentes,
**caractérisé en ce qu'**
au moins une autre fonction est exécutée en fonction du potentiel de danger.

4. Procédé selon l'une des revendications précédentes,
**caractérisé en ce que**
l'autre fonction consiste **en ce que** :
- le moteur a sa vitesse de rotation réduite au ralenti ou est désactivé,
- la boîte de vitesses est commutée dans une position neutre pour n'avoir aucune transmission de force,
- les systèmes de retenue de passagers réversibles sont activés,
- les seuils de déclenchement des systèmes de retenue de passagers irréversibles sont modifiés de manière à correspondre au potentiel de danger actuel,
- un système de régulation pour commander une intervention de freinage et/ou de moteur destinée à stabiliser le mouvement de véhicule est modifié de manière à être optimisé pour une décélération de véhicule importante,
- les autres usagers du trafic sont avertis par l'activation des systèmes d'indication de direction et/ou du système optique,
- les véhicules suivants sont informés de la décélération du véhicule précédent au moyen d'une transmission radio,
- des données des objets détectés dans l'environnement du véhicule et des données caractérisant le comportement de conduite propre sont enregistrées dans un système de mémoire non volatile, ou
- une centrale de régulation de la circulation ou une centrale d'urgence est informée, au moyen d'une transmission radio, de la position du véhicule, qui a été définie à l'aide d'un procédé de localisation assisté par satellite,
ou une combinaison de ceux-ci.

5. Dispositif de déclenchement automatique d'une décélération d'un véhicule pour empêcher une collision avec un autre objet ou diminuer les suites d'une collision qui précède avec un autre objet,
**caractérisé en ce que**
des signaux d'un système d'émission et de réception de signaux radar ou lidar ou d'un système de réception de signaux vidéo sont acheminés vers le dispositif, un système de détermination de potentiel de danger détermine en fonction des objets détectés un potentiel de danger et des moyens sont prévus pour activer le système de décélération du véhicule et, lorsqu'un seuil de potentiel de danger prédéterminé, qui se situe en dessous du seuil de déclenchement pour la décélération, a été dépassé, les moyens de décélération du véhicule peuvent être déplacés dans un état de préparation au freinage.

6. Dispositif selon la revendication 5,
**caractérisé par**
au moins un autre moyen pour pouvoir déclencher d'autres fonctions en fonction du potentiel de danger.

7. Dispositif selon la revendication 5 ou 6,
**caractérisé en ce que**
les autres moyens sont :
- un système de commande moteur qui peut diminuer la vitesse de rotation du moteur sur la vitesse au ralenti ou désactiver le moteur,
- un système de commande de boîte de vitesses qui peut commuter la boîte de vitesses dans une position neutre pour n'avoir aucune transmission de force,
- un système de commande des systèmes de retenue de passagers qui peut activer les systèmes de retenue de passagers réversibles,
- un système de commande des systèmes de retenue de passagers qui peut modifier les seuils de déclenchement des systèmes de retenue de passagers irréversibles de manière à ce qu'ils soient adaptés au potentiel de danger actuel,
- un système de régulation pour commander une intervention de freinage et/ou de moteur destinée à stabiliser le mouvement de véhicule, et qui est modifié de manière à être optimisé pour une décélération de véhicule importante,
- un système d'activation des systèmes d'indication de direction et/ou du système optique de manière à pouvoir avertir les autres usagers des autres véhicules du trafic,
- un système de transmission radio qui permet d'informer les véhicules suivants de la décélération du véhicule précédent,
- un système de mémoire non volatile qui mémorise des données des objets détectés dans l'environnement du véhicule et des données caractérisant le comportement de conduite du véhicule propre, ou
- un système de transmission radio qui informe une centrale de régulation de la circulation ou une centrale d'urgence de la position du véhicule, qui a été définie à l'aide d'un procédé de localisation assisté par satellite,
ou une combinaison de ceux-ci.
